# EUROPEAN PATENT APPLICATION

(11) **EP 1 278 289 A2**
(43) Date of publication of application: **22.01.2003**
(21) Application number: 02015497.7
(22) Date of filing: 12.07.2002
(51) Int. Cl.: H02K 7/06

(54) **An electro-mechanical actuator**

(30) Priority: 17.07.2001 IT TO20010698
(71) Applicant: SKF INDUSTRIE S.P.A., 10121 Torino (IT)
(72) Inventor: Marik, Mato, c/o SKF Industrie S.p.A., 10121 Torino (IT)
(74) Representative: Fioravanti, Corrado

(57) **Abstract**

An electro-mechanical actuator includes an electric stepper motor (12) and a nut/screw unit (16) associated with the rotor (14) of the electric motor (12) for converting the rotary motion of the rotor (14) into axial translation of the screw (18) or of the nut (19). The screw (18) is a multistart screw. The nut (19) is made of a plastics material with a high wear resistance.

## Description

The present invention relates to an electro-mechanical actuator; more in particular, but not exclusively, the invention relates to an electro-mechanical actuator for fitting to a motor vehicle for operating, for example, the clutch, the gearbox , etc.

There is a trend in the automobile industry today to develop arrangements, whereby conventional hydraulic drives for controlling the brakes, the clutch and the gearbox are replaced by electro-mechanical actuators, connected electrically to push-buttons or levers controlled by the driver.

Several arrangements have been suggested recently which include an electric motor, of a brushless type or a commutated type, coupled to a nut/screw unit which converts the rotary motion of the rotor of the electric motor into the rectilinear translation of a worm screw. In some applications, re-circulating-ball screws are used, which give the actuator an excellent performance, thanks to the low friction offered by the balls, which also ensure that the axial position of the screw is highly accurate.

However, while electro-mechanical actuators with re-circulating-ball screws are accurate and reliable, they carry very high manufacturing costs which make them unsuitable for the large scale production required in the automobile industry, especially since the degree of accuracy required to operate a clutch or a gearbox box is not generally very high. A re-circulating-ball screw requires highly accurate machine tooling to manufacture the nut (made of tempered steel) and, in particular to form the helical grooves which constitute external raceways for the balls and the elements forming the return raceways for the balls.

In addition, electric motors with commutators, or of the brushless type generally used for rotating the nut, sometimes need to be associated with a reduction gearbox assembly and with sensors which register the axial position of the screw and are connected to the electric motor in a closed hoop configuration, thereby ensuring that the screw is accurately positioned.

The object of the present invention is to provide a reliable and low-cost electro-mechanical actuator, which can be mounted in a motor vehicle for operating a part such as for example a clutch or a selector lever for the gearbox.

This and other objects and advantages, which will be better understood later, are achieved according to the invention by providing an electro-mechanical actuator having the features defined in the independent Claim 1. Preferred embodiments are defined in the dependent Claims.

The structural and operating characteristics of two preferred embodiments of the invention will now be described purely by way of non-limitative example, with reference to the appended drawings, in which:
Figure 1 is an axially sectioned schematic view of a first embodiment of an electro-mechanical actuator according to the present invention;
Figure 2 is an axially sectioned view of a second embodiment of an electro-mechanical actuator of the invention; and
Figure 3 is a schematic view, on an enlarged scale, of a screw and nut unit such as are fitted to the actuators of Figures 1 and 2.

In the following description, the structure and the operation of the actuator will be described in only as much detail as is required to understand the invention.

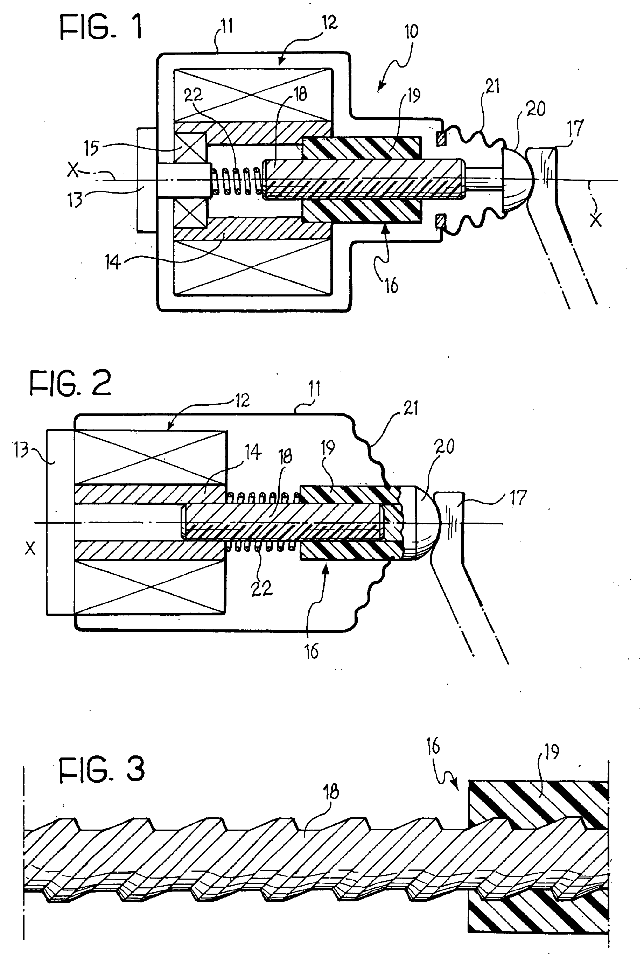

With reference first to Figure 1, an electro-mechanical actuator according to the present invention is generally indicated 10. The actuator 10 has a housing 11 with an electric stepper motor 12, of a type known per se, incorporated therein. An electronic unit for controlling the motor 12 is indicated 13; the unit 13 is mounted on a side, defined here as the rear, of the housing 11 and includes the electronic supply and control of the angular position of the rotor 14, which is mounted for rotation about a longitudinal axis X by means of a pair of bearings 15, only one of which is shown. The manufacturing and operating characteristics of the stepper motor (which can be of any type available in the trade) are known per se and will not therefore be described in detail here.

The electro-mechanical actuator includes a screw and nut unit, generally indicated 16, which converts the rotary motion of the rotor 14 into rectilinear translation along the axis X for operating a member 17, in this example a control lever for a clutch assembly.

The screw and nut unit 16 includes a multi-start screw 18 coupled to a nut 19 fixed onto the rotor 14 for rotation therewith. The forward end of the screw 18 has a thrust head schematically indicated 20 for interaction with the lever 17; a protecting hood 21 hermetically seals the chamber inside the housing 11.

A resilient element, indicted 22, such as for example a longitudinally compressed spring, is interposed between an axially stationary portion of the actuator and the axially movable element (constituted by the screw 18 in the example of Figure 1 and by nut 19 in the example of Figure 2, as will be explained later); the resilient element 22 ensures that the thrust head 20 remains in contact with the clutch lever 17 both upon assembly and during operation of the actuator should the clutch become worn.

Connection details of the member 17 to be controlled are neither described nor illustrated in any detail here since they are irrelevant as far as understanding the invention is concerned.

The multi-start screw 18 is constituted by a cylindrical rod, preferably threaded along its entire length with an acme screw thread for facilitating translation in either direction along the axis X, in other words, in order to ensure a reversible rectilinear alternating motion. To the same end, the acme screw thread of the screw has a long pitch, both to ensure the motion is reversible and in order that the screw 18 moves significantly axially as a result of only small angular movements of the rotor 14.

The choice of the number of starts of the screw, of the helix angle and the diameter of the screw can vary in dependence on the desired axial movement and on the forces which are operating.

The thread of the screw 18 can be formed both quickly and economically by rolling (without discarding any material), by feeding smooth rods into a forming machine fitted with motor-driven forming rollers and then by cutting the threaded rods into the required lengths. The screw 18 is preferably made of cold workable steel, with a carbon content in the range of 0.3-0.4%.

The nut 19 is formed by moulding a plastics material with a high wear resistance and low friction in contact with the steel constituting the screw 18. The plastics material of the nut 19 is a polymer material which is of stable dimensions at the operating temperatures (typically of between -40° and +160° C) which might occur in the site where the actuator is to be mounted in the vehicle.

The polymeric material preferably contains polyetheretherketone (PEEK) and/or polytetrafluoroethylene (PTFE or Teflon®), or Nylon PA6 with the addition of MoSO₄, which have lubricating properties.

The choice of the material or materials constituting the nut naturally depend also on the application, that is on the device that the actuator is provided to control, as well as on the forces that the actuator must develop.

Tests carried out by the Applicant showed that it was possible to achieve excellent results, in terms of reliability, with nuts made of PEEK or PTFE. In either case, nuts subjected to continuous operation for a period of three months, equivalent to the screw travelling a total of 430 km, revealed a degree of wear of only 100 microns, which is irrelevant with regard to controlling a clutch or the gearboxs in a motor vehicle.

In order to operate these devices (clutch, gearboxes etc.), the electro-mechanical actuator must be able to cause an axial movement of several centimetres. Operation of a friction clutch, for example, typically requires a movement or travel of around 30-40 mm. Appropriate selection of the diameter of the screw, of the number of starts and of the helix angle of the screw can achieve an axial movement of this length by controlling rotation of the rotor through only half or a quarter of a rotation.

The use of a stepper motor is therefore especially advantageous since rotation of the rotor 14 (and the resulting axial movement of the screw 18) can be highly accurately controlled; above all, a stepper motor ensures that the absolute axial position of the screw is controlled, rather than only the axial movement performed. As will be known to experts in the art, this is achieved by means of a special chip which is usually provided in the electronic control unit of any stepper motor. Therefore, with a stepper motor there is no need for the usual position sensors which are indispensable with either brushless or communtated motors in order to determine and control the axial position reached by the screw. In addition, a particular initial axial position can be returned to automatically when the vehicle is started.

Furthermore, in order to operate devices which do not require high axial forces (to control a clutch or gearboxes, for example) the electric motor requires no associated gearbox reduction unit.

Figure 2 illustrates an alternative embodiment in which the screw 18 is fixed for rotation with the rotor 14 of the electric motor, while the nut 19 is the translating element in this arrangement.

In either example, the rotary movement imparted to the rotor 14 by the nut/screw unit 16 is converted into axial translation (of the screw 18 in the example of Figure 1 and of the nut 19 in the example of Figure 2).

It will be appreciated that the actuator of the present invention offers a degree of accuracy which is slightly less than, though comparable to that of conventional re-circulating-ball screw arrangements, such as those described in the introduction. In compensation, however, the actuator of the present invention has very low manufacturing costs, which make it an ideal choice for large scale applications such as those of the automobile industry. In particular, moulding the nut from a plastics material constitutes an alternative which is economical and achieves a significant weight reduction compared to devices made entirely of steel.

Although the invention has been described here with reference to the control of clutches and gearboxes, it is evident that any reference to these possible fields of application should in no way be interpreted as limitative with regard to the scope of the invention.

## Claims

1. An electro-mechanical actuator including:
- an electric motor (12);
- a nut/screw unit (16) associated with the rotor (14) of the electric motor (12) for converting the rotary movement of the rotor (14) into axial translation of a screw (18) or of a nut (19);
**characterised in that**
- the electric motor (12) is a stepper motor;
- the screw (18) is a multi-start screw;
- the nut (19) is made of a plastics material.

2. An actuator according to Claim 1, **characterised in that** the multi-start screw (18) has an acme screw thread.

3. An actuator according to Claims 1 or 2, **characterised in that** the screw thread of the screw (18) is formed by rolling.

4. An actuator according to Claim 3, **characterised in that** the screw (18) is formed by cutting a portion of the required length from a cylindrical rod on which the thread is formed by rolling.

5. An actuator according to Claim 1, **characterised in that** the screw (18) is made of cold-workable steel, with a carbon content of the order of 0.3-0.4%.

6. An actuator according to Claim 1, **characterised in that** the nut (19) is formed by moulding a plastics material with a high wear resistance and low friction properties with respect to the steel of the screw (18).

7. An actuator according to Claim 1 or 6, **characterised in that** the plastics material of the nut (19) is a polymeric material which maintains stable dimensions at temperatures of between about -40° and about +160 C.

8. An actuator according to any of Claims 1, 6 and 7, **characterised in that** the plastics material constituting the nut (19) includes a polymeric material selected from a group consisting of: polyetheretherketone, polytetrafluoroethylene, Nylon PA6 with the addition of MoSO₄.

9. An actuator according to any of Claims 1, 6, 7 and 8, **characterised in that** the nut (19) is produced in one piece by moulding.

10. An actuator according to any preceding claim, **characterised in that** it is mounted on a motor vehicle and is connected for operation of at least one operating member (17) on board the vehicle.

11. An actuator according to Claim 10, **characterised in that** the member (17) to be operated is a member for operating the clutch or the gearbox of the vehicle.

12. An actuator according to any preceding Claim, **characterised in that** it also includes longitudinally compressed resilient means (22) interposed between an axially fixed portion of the actuator and an axially movable portion (18 or 19) of the nut/screw unit (16).
